# EUROPÄISCHE PATENTANMELDUNG

(11) **EP 0 535 439 A1**
(43) Veröffentlichungstag der Anmeldung: **07.04.1993**
(21) Anmeldenummer: 92115748.3
(22) Anmeldetag: 15.09.1992
(51) Int. Cl.: C21D 9/56, C21D 1/74

(54) **Schleusenvorrichtung für das Ein- und/oder Ausführen von bandförmigem Material in/aus dampf- oder gasgefüllte(n) Behälter(n)**

(30) Priorität: 01.10.1991 DE 9112225 U
(71) Anmelder: Otto Junker GmbH, D-52152 Simmerath (DE)
(72) Erfinder: Lambertz, Georg, Dipl.-Ing., 5108 Monschau (DE); Schütt, Bernd, Dipl.-Ing., 5107 Simmerath (DE)
(74) Vertreter: König, Werner, Dipl.-Ing.

(57) **Zusammenfassung**

Bei einer Schleusenvorrichtung für das Ein- und/oder Ausführen von bandförmigem Material in/aus dampf- oder gasgefüllte(n) Behälter(n), wie z.B. mit Überdruck betriebene Schutzgasöfen zum Erwärmen von Metallbändern, ist wenigstens ein Paar von in Transportrichtung des bandförmigen Materials (8) bewegbar gelagerten Schleusenelementen (6,6+6',7,7+7') vorgesehen, die zwischen sich einen Zwischenraum für das bandförmige Material (8) bilden. Die Schleusenelemente (6,6+6',7,7+7') haben zwischenraumseitig glatte, aus Keramik oder Metall gebildete Oberflächen, deren Abstand voneinander größer ist als die Dicke des bandförmigen Materials (8).

Aufgrund dieses Aufbaus kann zum einen der Spalt zwischen den beiden Schleusenelementen (6,6+6',7,7+7') und der Oberfläche des bandförmigen Materials (8) gering gehalten werden, so daß nur ein geringer Schutzgasanteil nach außen strömt und gleichzeitig das Eindringen von Luft unterbunden wird. Zum anderen ist ein nahezu wartungsfreier Betrieb der Schleusenvorrichtung bei gleichzeitig langer Lebensdauer gewährleistet.

## Beschreibung

Die Neuerung betrifft eine Schleusenvorrichtung für das Ein- und/oder Ausführen von bandförmigem Material in/aus dampf- oder gasgefüllte(n) Behälter(n), wie z.B. mit Überdruck betriebene Schutzgasöfen zum Erwärmen von Metallbändern, wobei die Schleusenvorrichtung einer Behälteröffnung am Ein- und/oder Auslaß des Behälters zugeordnet ist und ein Dichtungsgehäuse mit Ein- und Auslauföffnung hat, in dem wenigstens ein Paar von in Transportrichtung des bandförmigen Materials bewegbar gelagerten Schleusenelementen sich befindet, die zwischen sich einen Zwischenraum für das bandförmige Material bilden.

Beim Betrieb von Schutzgasöfen, beispielsweise zum Erwärmen von Metallbändern im Durchlaufbetrieb, ist es zur Vermeidung einer Oxidbildung auf der Oberfläche der Metallbänder erforderlich, den Eintritt von Luft bzw. Sauerstoff in den mit Schutzgas durchfluteten Ofenraum zu verhindern. Hierzu ist es im einfachsten Falle möglich, den Ofeneingang sowie den Ofenausgang möglichst eng der Querschnittsform des Erwärmungsgutes anzupassen und im Ofeninnenraum einen leicht erhöhten Atmosphärendruck gegenüber der Außenatmosphäre aufrechtzuerhalten, so daß immer eine gewisse, nach Möglichkeit geringe Menge an Schutzgas aus dem Ofenraum in die freie Atmosphäre entweicht.

Es ist bereits bekannt (DE PS 3 430 205), Schleusenvorrichtungen am Ofeneingang bzw. -ausgang vorzusehen, wobei mit Hilfe von relativ zueinander verstellbaren Schleusenelementen ein Öffnungsspalt definiert wird. Zwischen den Schleusenelementen und dem zu erwärmenden bandförmigen Erwärmungsgut wird einerseits stets ein Luftspalt aufrechterhalten, um eine Berührung des Bandes mit den Schleusenelementen nach Möglichkeit zu vermeiden. Andererseits muß dieser Luftspalt möglichst gering gehalten werden, damit sich die Leckverluste an Schutzgas in Grenzen halten. Daher ist es nicht zu vermeiden, daß es beispielsweise aufgrund einer Welligkeit in dem bandförmigen Material hin und wieder zu Berührungen der Materialoberfläche mit den Schleusenelementen kommt. Damit nun durch derartige Berührungen keine Beschädigung an dem zu erwärmenden Material eintritt, gleichzeitig aber auch eine ausreichende Abdichtung gewährleistet ist, sind die Schleusenelemente mit einem Überzug aus keramischen Filz oder dergleichen versehen. Nachteilig wirkt sich nun bei dieser bekannten Schleusenvorrichtung aus, daß aufgrund der Wärmeeinflüsse und durch gelegentliche Berührungen zwischen bandförmigem Material und Schleusenelement der Überzug aus keramischem Filz in relativ kurzen Zeitabständen erneuert werden muß.

Es ist ferner eine Schleusenvorrichtung für Industrieöfen bekannt (DE-OS 1 458 989), die für die Wärmebehandlung von bandförmigem Material im Durchlaufbetrieb an der Eingangs - bzw. Ausgangsseite des Ofens ein aus rotationssymmetrischen Körpern gebildetes Paar von in Transportrichtung des bandförmigen Materials bewegbar gelagerten Schleusenelementen vorsieht, wobei die Schleusenelemente von beiden Seiten fest gegen die Oberfläche des bandförmigen Materials gedrückt werden. Hierbei sind die Schleusenelemente mit elastischen Überzügen, wie z.B. Gummi, Neopren oder Silikonkautschuk, versehen, um bei dem vorliegenden Anpreßdruck der beiden Schleusenelemente eine möglichst vollständige Umschließung des bandförmigen Materials mit den Schleusenelementüberzügen zu gewährleisten. Hierdurch läßt sich der Ein- bzw. Austritt von Gasen entlang dem bandförmigen Material minimieren. Zusätzlich sind besondere Dichtungsmittel zwischen Schleusenelementoberfläche und dem Dichtungsgehäuse der Schleusenvorrichtung vorgesehen. Aufgrund der elastischen Überzüge werden Oberflächenbeschädigungen des Erwärmungsgutes weitgehend verhindert. Um nun den Abstand zwischen den Schleusenelementen und dem zu erwärmenden Material verändern zu können, weisen die Schleusenelemente synchron verstellbare Lager auf.

Es ist darüber hinaus auch bekannt (G 8 602 317.9), den Überzug von Schleusenelementen aus einem Filzband zu bilden, das mit Hilfe von Umlenkwalzen, die in Abstand von dem zu erwärmenden bandförmigen Material angeordnet sind, in eine Umlaufbewegung versetzt wird, wenn die Schleusenelemente auf die Oberfläche des bandförmigen Materials gedrückt werden.

Die bekannten Maßnahmen zur Eingangs- und/oder Ausgangsabdichtung von Öfen mit Hilfe von rotationssymmetrischen Schleusenelementen, die gegen das bandförmige Material gedrückt werden, sind nun mit verschiedenen Nachteilen behaftet. So üben die bei den bekannten Vorrichtungen nicht angetriebenen Schleusenelemente beim Andrücken gegen das Erwärmungsgut eine gewisse Bremswirkung auf dessen Transportbewegung aus, die beispielsweise bei Erwärmungsöfen, durch die das zu erwärmende Bandmaterial mit Hilfe von Gasstrahlen getragen wird, die Zugkraft auf das zu erwärmende Band unkontolliert erhöhen bzw. reduzieren. Dadurch werden unerwünschte Berührungen der Bandmaterialoberfläche mit Teilen im Ofeninnenraum, z.B. Düsen oder Düsenkästen, verursacht. Hierbei wird in aller Regel die Oberfläche des zu erwärmenden Bandes beeinträchtigt. Darüber hinaus kann bei bandförmigem Material geringer Dicke auch ein unzulässiges Recken aufgrund der Bremskraft der Schleusenelemente hervorgerufen werden, was eine Qualitätsminderung und im ungünstigsten Fall ein Bandmaterialabriß zur Folge haben kann.

Der vorliegenden Neuerung liegt daher die Aufgabe zugrunde, bei einer Schleusenvorrichtung der eingangs erwähnten Art das Ein- bzw. Ausströmen von Gasen oder Dämpfen durch den Ein- bzw. Ausgang eines Behälters, insbesondere eines Ofens zum Erwärmen von Metallbändern, während dem Ein- und/oder Ausführen des bandförmigen Materials zu minimieren, ohne daß Oberflächenbeeinträchtigungen des Bandes in Kauf genommen bzw. unzulässige Zugwirkungen auf dieses ausgeübt werden. Die Vorrichtung soll darüber hinaus eine lange Lebensdauer haben.

Bei der erfindungsgemäßen Schleusenvorrichtung der eingangs erwähnten Art wird dies insbesondere dadurch erreicht, daß die Schleusenelemente zwischenraumseitig glatte, aus Keramik oder Metall gebildete Oberflächen haben, deren Abstand voneinander größer ist als die Dicke des bandförmigen Materials.

Aufgrund dieses Aufbaus kann zum einen der Spalt zwischen den beiden Schleusenelementen und der Oberfläche des bandförmigen Materials gering gehalten werden, so daß nur ein geringer Schutzgasanteil nach außen strömt und gleichzeitig das Eindringen von Luft unterbunden wird. Zum anderen ist ein nahezu wartungsfreier Betrieb der Schleusenvorrichtung bei gleichzeitig langer Lebensdauer gewährleistet.

Die erfindungsgemäße Vorrichtung kann nun so ausgebildet sein, daß die Schleusenelemente rotationssymmetrische Körper darstellen.

Aufgrund der hierdurch ermöglichten Drehbewegung der Schleusenelemente ist damit ebenfalls ein zwischenraumseitiges Mitbewegen der Schleusenelemente mit dem bandförmigen Material möglich.

Die erfindungsgemäße Vorrichtung kann weiter so ausgebildet sein, daß der Abstand zwischen einzelnen Schleusenelementen veränderbar ist.

Es läßt sich daher einerseits eine Anpassung der Spaltbreite an die Dicke des zu befördernden bandförmigen Materials vornehmen, andererseits der Spalt so weit öffnen, daß bei Inbetriebnahme der Schleusenvorrichtung das bandförmige Material zunächst leicht in den Behälter eingeführt werden kann.

Die Veränderbarkeit des Abstandes zwischen den einzelnen Schleusenelementen kann erfindungsgemäß dadurch erreicht werden, daß wenigstens ein Schleusenelement am Ende eines Schwenkhebels gelagert ist.

Die erfindungsgemäße Vorrichtung kann ferner so ausgebildet sein, daß wenigstens ein Schleusenelement mit einem Rotationsantrieb versehen ist.

Hierdurch ist es möglich, die Relativgeschwindigkeit von Schleusenelement-Oberfläche sowie bandförmigem Material besonders wirksam zu minimieren. Dies ist insbesondere dann zweckmäßig, wenn der Abstand zwischen den beiden Oberflächen des bandförmigen Materials einerseits sowie den jeweiligen Oberflächen der Schleusenelemente andererseits extrem gering ist, so daß Kontakte zwischen diesen nicht ganz auszuschließen sind. Hierdurch wird insbesondere einer Schrammenbildung an der Oberfläche des zu befördernden Materials vorgebeugt.

Die erfindungsgemäße Vorrichtung kann auch so ausgebildet sein, daß wenigstens ein Schleusenelement vorgesehen ist, das mehrere rotationssymmetrische Körper hat, um die ein Endlosband geschlungen ist.

Aufgrund der hierdurch erreichten Verlängerung des Dichtspaltes kann eine noch günstigere Abdichtung des Behältereingangs bzw. -ausgangs bewirkt werden. Dabei ist es möglich, daß das Endlosband aus Gliedern oder aus bandförmigem Material gebildet ist.

Bei der erfindungsgemäßen Vorrichtung kann nun auch vorgesehen sein, daß bei übereinander angeordneten Schleusenelementen zumindest das unten gelegene Schleusenelement mit einem Rotationsantrieb gekoppelt ist.

Insbesondere bei waagerechtem Transport des zu erwärmenden Bandmaterials kann sich dieses auf dem unteren Schleusenelement abstützen, während das obere Schleusenelement dagegen mit geringem Abstand über der Bandoberfläche angeordnet ist. Es kann daher zweckmäßig sein, die Antriebsgeschwindigkeit des unteren Schleusenelementes so zu wählen, daß die Relativgeschwindigkeit zu dem Bandmaterial gleich Null ist. Dadurch wird einerseits erreicht, daß die Oberfläche des Bandmaterials nicht beeinträchtigt wird, andererseits wird aber auch eine unzulässige Veränderung der Zugkraft des zu erwärmenden Bandes wirksam vermieden.

Schließlich kann bei der erfindungsgemäßen Vorrichtung vorgesehen sein, daß mindestens ein Schleusenelement an einen Kühlmittelkreislauf angeschlossen ist.

Insbesondere beim Einsatz der Schleusenvorrichtung an Schutzgasöfen kann es zweckmäßig sein, dem Ofenraum nahe gelegene Schleusenelemente zusätzlich zu kühlen.

Im folgenden Teil der Beschreibung wird die erfindungsgemäße Vorrichtung anhand von zwei Ausführungsbeispielen eines Ofens zum Erwärmen von Metallbändern erläutert.

Im einzelnen zeigen:
- Fig. 1:: Eine Schleusenvorrichtung gemäß der Neuerung mit zwei rotationssymmetrischen Körpern,
- Fig. 2:: eine weitere Schleusenvorrichtung, bei der das Schleusenelement zwei rotationssymmetrische Körper hat, die gemeinsam von einem Endlosband umschlungen sind sowie
- Fig. 3:: einen vertikalen Schnitt durch die Schleusenvorrichtung gemäß Fig. 2.

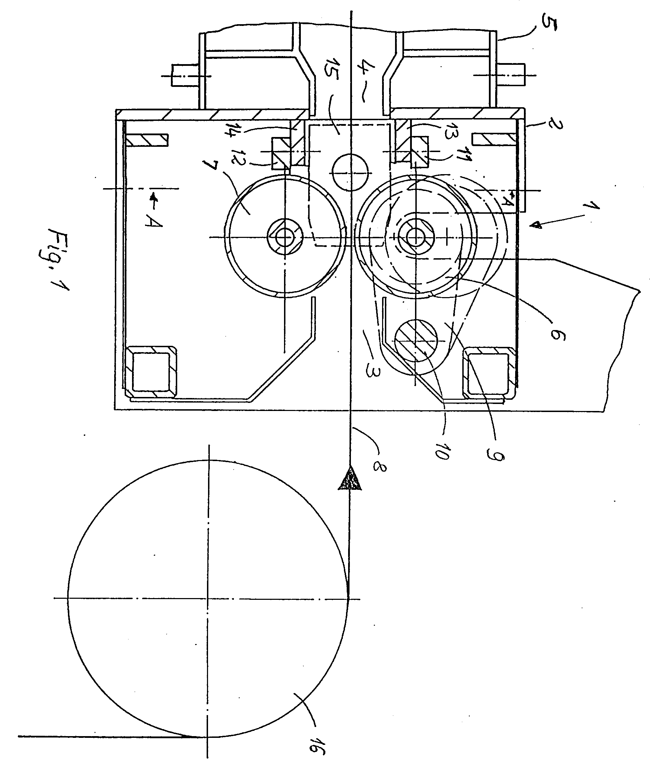

Entsprechend Fig. 1 weist die erfindungsgemäße Schleusenvorrichtung 1 ein Dichtungsgehäuse 2 auf, das mit einer äußeren sowie einer inneren Öffnung 3 und 4 versehen ist. Die Schleusenvorrichtung 1 ist in diesem Beispiel an der Eingangsseite eines Ofens 5 befestigt. Außerdem sind ein oberes rotationssymmetrisches Schleusenelement 6 sowie ein entsprechendes unteres Schleusenelement 7 vorhanden, die nahe einem Metallband 8 angeordnet sind, wobei der Abstand der Schleusenelemente 6 und 7 nur wenig größer ist als die Dicke des zu erwärmenden Bandes 8. Die Schleusenelemente 6 und 7 haben insgesamt, daher insbesondere auch an der jeweils dem Metallband zugewandten Seite, glatte, in diesem Beispiel aus Metall gebildete Oberflächen. In diesem Ausführungsbeispiel ist das untere Schleusenelement 7 mit einem Rotationsantrieb gekoppelt, der allerdings nicht im einzelnen dargestellt ist. Um nun den Spalt zwischen dem oberen Schleusenelement 6 und dem Metallband 8 verändern zu können, ist das obere Schleusenelement 6 mit einem Schwenkhebel 9 verbunden, der wiederum auf einer Drehachse 10 gelagert ist. Als Rotationsantrieb für die Drehachse dient beispielsweise ein Pneumatikzylinder (in der Zeichnung nicht dargestellt).

Zur weiteren Abdichtung des Ofens 5 sind in Querrichtung der rotationssymmetrischen Schleusenelemente 6 und 7 Dichtleisten 11 und 12 vorhanden, die auf Konsolen 13 und 14 befestigt sind. Zur seitlichen Abdichtung ist jeweils eine Dichtplatte 15 angeordnet.

Mit dieser Schleusenvorrichtung 1 wird eine relativ gute Abdichtung der Ofeneingangsöffnung erreicht. Die gleiche Schleusenvorrichtung 1, jedoch in spiegelbildlicher Form, kann auch zum Abdichten des Ofenausgangs (hier nicht dargestellt) benutzt werden.

Weiter dient eine Umlenkwalze 16 zum sicheren Einführen des Metallbandes 8 in den Ofen 5, wobei das Metallband 8 in diesem Ausführungsbeispiel von unten her um 90° umgelenkt und in waagerechter Ebene durch die Schleusenvorrichtung 1 und durch den Ofen 5 gefördert wird.

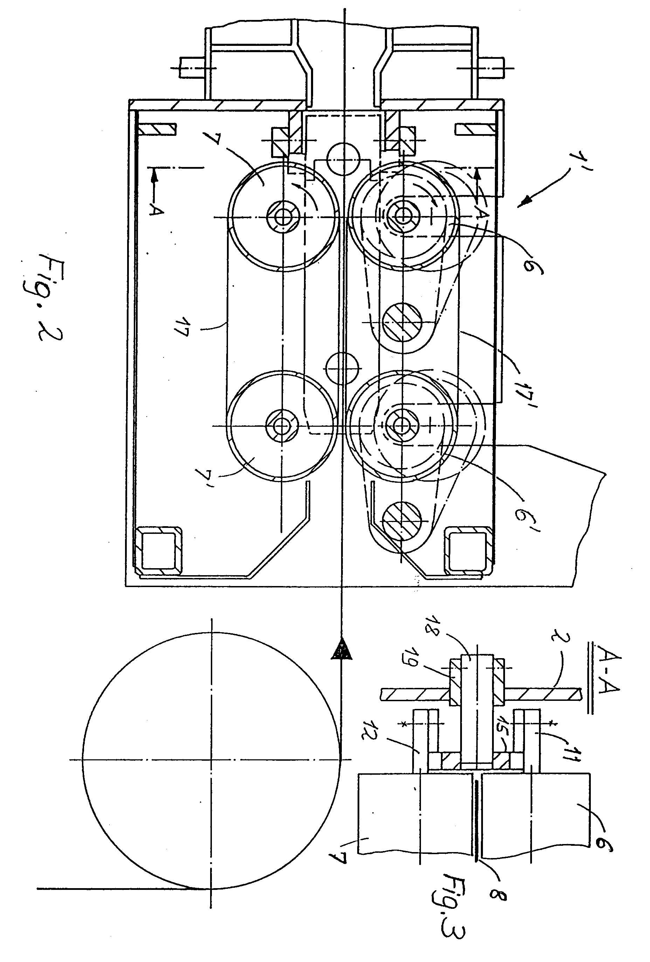

Die Schleusenvorrichtung 1' gemäß Fig. 2 sieht nun dagegen vor, daß sowohl das oben als auch unten gelegene Schleusenelement (6 und 7 sowie 6' und 7') aus jeweils zwei rotationssymmetrischen Körpern gebildet sind, die im Abstand voneinander angeordnet sind. Die Schleusenelemente 6 und 6' werden hierbei von einem Endlosband aus Stahl 17 und die Schleusenelemente 7 und 7' von einem entsprechenden Endlosband 17' umschlungen. Die übrigen Merkmale sind mit den Merkmalen der Fig. 1 zu vergleichen.

Bei dem Ausführungsbeispiel entsprechend Fig. 2 erhält man somit einen langgezogenen Dichtkanal mit einer sehr guten Abdichtung der Ofenatmosphäre gegenüber der Außenatmosphäre.

Die Ausschnittzeichnung gemaß Fig. 3 zeigt eine Teilansicht durch die Schnittstelle A-A der Fig. 1 oder 2, so daß die Anordnung der seitlichen Dichtplatte 15 sichtbar wird. Sie kann mit Hilfe einer Halterung 18 in einer in dem Dichtungsgehäuse 2 eingelassenen Büchse 19 hin und her bewegt werden.

Schließlich kann vorgesehen sein, wenigstens diejenigen Schleusenelemente, welche dem Ofenraum am nächsten liegen, mit einem Kühlmittel zu beaufschlagen (in den Fig. nicht eingezeichnet). Im Falle einer Wasserkühlung kann dann vorgesehen sein, daß das Kühlwasser an der einen Seite der jeweiligen Schleusenelemente eingeleitet und an der anderen Seite wieder abgeführt wird.

### Bezugszeichen

- 1,1': Schleusenvorrichtung
- 2: Dichtungsgehäuse
- 3: äußere Öffnung der Schleusenvorrichtung
- 4: innere Öffnung der Schleusenvorrichtung
- 5: Ofen
- 6,6+6': rotationssymmetrisches Schleusenelement
- 7,7+7': rotationssymmetrisches Schleusenelement
- 8: Metallband
- 9: Schwenkhebel
- 10: Drehachse
- 11: Dichtleiste
- 12: Dichtleiste
- 13: Konsole
- 14: Konsole
- 15: Dichtplatte
- 16: Umlenkwalze
- 17,17': Endlosband aus Stahl
- 18: Halterung
- 19: Büchse an Dichtungsgehäuse

## Patentansprüche

1. Schleusenvorrichtung für das Ein- und/oder Ausführen von bandförmigem Material in/aus dampf- oder gasgefüllte(n) Behälter(n), wie z.B. mit Überdruck betriebene Schutzgasöfen zum Erwärmen von Metallbändern, wobei die Schleusenvorrichtung einer Behälteröffnung am Ein- und/oder Auslaß des Behälters zugeordnet ist und ein Dichtungsgehäuse mit Ein- und Auslauföffnung hat, in dem wenigstens ein Paar von in Transportrichtung des bandförmigen Materials bewegbar gelagerten Schleusenelementen sich befindet, die zwischen sich einen Zwischenraum für das bandförmige Material bilden, **dadurch gekennzeichnet**, daß die Schleusenelemente (6,6+6',7,7+7') zwischenraumseitig glatte, aus Keramik oder Metall gebildete Oberflächen haben, deren Abstand voneinander größer ist als die Dicke des bandförmigen Materials (8).

2. Vorrichtung nach Anspruch 1, dadurch gekennzeichnet, daß die Schleusenelemente (6,6+6',7,7+7') rotationssymmetrische Körper darstellen.

3. Vorrichtung nach Anspruch 1 oder 2, dadurch gekennzeichnet, daß der Abstand zwischen einzelnen Schleusenelementen (6,6+6',7,7+7') veränderbar ist.

4. Vorrichtung nach Anspruch 3, dadurch gekennzeichnet, daß wenigstens ein Schleusenelement (6,6+6',7,7+7') am Ende eines Schwenkhebels (9) gelagert ist.

5. Vorrichtung nach einem der vorhergehenden Ansprüche, dadurch gekennzeichnet, daß wenigstens ein Schleusenelement (6,6+6',7,7+7') mit einem Rotationsantrieb versehen ist.

6. Vorrichtung nach einem der vorhergehenden Ansprüche, dadurch gekennzeichnet, daß wenigstens ein Schleusenelement (6,6+6',7,7+7') vorgesehen ist, das mehrere rotationssymmetrische Körper (6,6',7,7') hat, um die ein Endlosband (17,17') geschlungen ist.

7. Vorrichtung nach Anspruch 6, dadurch gekennzeichnet, daß das Endlosband (17,17') aus Gliedern gebildet ist.

8. Vorrichtung nach Anspruch 6, dadurch gekennzeichnet, daß das Endlosband (17,17') aus bandförmigem Material gebildet ist.

9. Vorrichtung nach einem der vorhergehenden Ansprüche, dadurch gekennzeichnet, daß bei übereinander angeordneten Schleusenelementen (6,6+6',7,7+7') zumindest das unten gelegene Schleusenelement (7,7+7') mit einem Rotationsantrieb gekoppelt ist.

10. Vorrichtung nach einem der vorhergehenden Ansprüche, dadurch gekennzeichnet, daß mindestens ein Schleusenelement (6,6+6',7,7+7') an einen Kühlmittelkreislauf angeschlossen ist.
